# EUROPÄISCHE PATENTANMELDUNG

(11) **EP 1 767 837 A1**
(43) Veröffentlichungstag der Anmeldung: **28.03.2007**
(21) Anmeldenummer: 06121145.4
(22) Anmeldetag: 22.09.2006
(51) Int. Cl.: F16J 15/10, F16J 15/32

(54) **Dichtung, insbesondere für eine Fluidbaugruppe in einem Fahrzeug**

(30) Priorität: 27.09.2005 DE 102005046048
(71) Anmelder: ROBERT BOSCH GMBH, 70442 Stuttgart (DE)
(72) Erfinder: Schepp, Rene, 71336, Waiblingen (DE); Heugle, Bernhard, 71723, Grossbottwar (DE); Denneler, Werner, 73207, Plochingen (DE); Blosch, Georg, 71711, Murr (DE); Hornberger, Kurt, 71332, Waiblingen (DE); Callies, Horst, 72202, Nagold (DE)

(57) **Zusammenfassung**

Die Erfindung betrifft eine Dichtung (10), insbesondere für eine Fluidbaugruppe in einem Fahrzeug, mit einem abriebbeständigen Werkstoff. Erfindungsgemäß umschließt der abriebbeständige Werkstoff als Außenhaut (12) wenigstens teilweise einen Innenkern (14) aus einem kälteflexibleren Werkstoff, wobei der Werkstoff des Innenkerns (14) eine tiefere Glasübergangstemperatur als der Werkstoff der Außenhaut (12) aufweist.

## Beschreibung

### Stand der Technik

Die Erfindung geht aus von einer Dichtung, insbesondere für eine Fluidbaugruppe in einem Fahrzeug, nach der Gattung des unabhängigen Patentanspruchs 1.

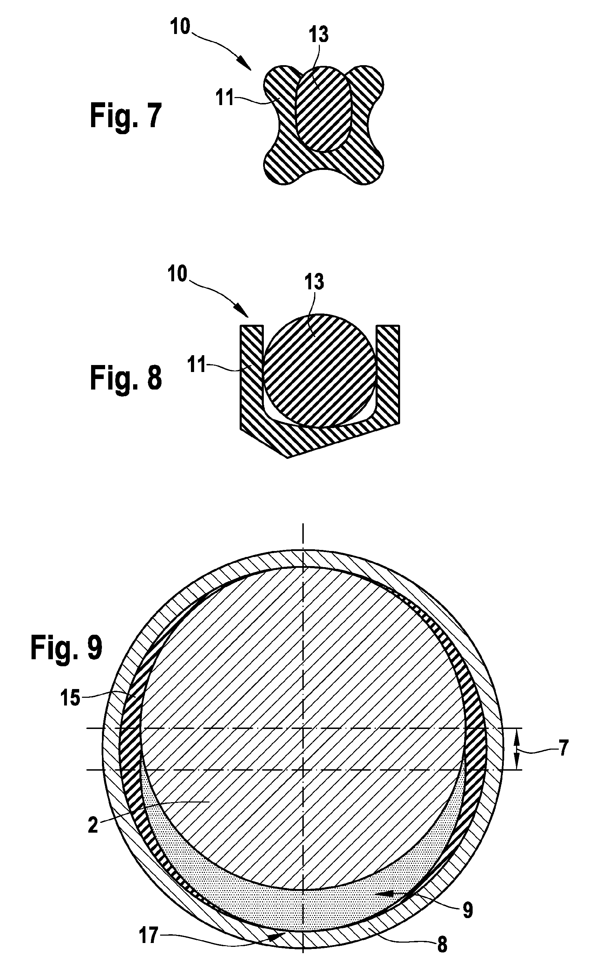

Dichtungen in Fluidbaugruppen, beispielsweise in hydraulischen Baugruppen wie z.B. Bremsensystemen bzw. Sicherheitssystemen, müssen in einem großen Temperaturbereich funktionieren. Eine wichtige Anforderung an solche Dichtungen ist insbesondere die Funktion bei sehr tiefen Temperaturen. Das Verhalten von solchen Dichtungen wird durch die dynamischen Werkstoffeigenschaften geprägt, welche unter anderem von der Temperatur und der Belastungsfrequenz bzw. der Belastungsgeschwindigkeit abhängig sind. Bei bekannten Anwendungen in der Bremsenhydraulik können bei tiefen Temperaturen immer wieder Probleme mit Undichtheiten bzw. Leckagen auftreten. Figur 9 zeigt eine schematische Schnittdarstellung einer herkömmlichen Fluidbaugruppe. Wie aus Figur 9 ersichtlich ist, kann sich bei einer herkömmlichen Dichtung 15, welche einen in einer Führung 8 bewegten Kolbens 2 oder eine in der Führung 8 bewegte Stange abdichtet, bei ungünstigen Bedingungen zwischen dem bewegten Kolben 2 bzw. der bewegten Stange und einer Dichtkante 17 der Dichtung 15 ein sichelförmiger Spalt 9 bilden. Durch die Verhärtung eines abriebbeständigen Werkstoffs der Dichtung 15 bei tiefen Temperaturen, fehlt der Dichtung 15 die Flexibilität, um eine bei einer hohen Belastungsgeschwindigkeit entstandene Auslenkung 7 des Kolbens 2 bzw. der Stange nachzustellen, so dass der sichelförmige Spalt 9 entsteht und somit eine Leckage auftreten kann.

### Vorteile der Erfindung

Die erfindungsgemäße Dichtung, insbesondere für eine Fluidbaugruppe in einem Fahrzeug, mit den Merkmalen des unabhängigen Patentanspruchs 1 hat demgegenüber den Vorteil, dass ein abriebbeständiger Werkstoff als Außenhaut einen Innenkern aus einem kälteflexibleren Werkstoff wenigstens teilweise umschließt, wobei der Werkstoff des Innenkerns eine tiefere Glasübergangstemperatur als der Werkstoff der Außenhaut aufweist. Durch die Ausführung der Dichtung mit einem Innenkern und einer Außenhaut ist es in vorteilhafter Weise möglich, für den Innenkern einen Werkstoff mit einer tiefen Glasübergangstemperatur zu verwenden, welcher sich auch bei hohen Belastungen und tiefen Temperaturen neutral verhält, d.h. kälteflexibel bleibt, aber nicht als Werkstoff zur Ausführung der kompletten Dichtung geeignet ist, weil der Werkstoff eine sehr geringe Verschleißbeständigkeit und/oder Extrusionsbeständigkeit aufweist. Um die positiven Eigenschaften eines solchen Werkstoffes trotzdem nutzen zu können, umschließt die Außenhaut aus dem verschleißbeständigen Werkstoff wenigstens teilweise den Innenkern. Dadurch wird eine durch tiefe Temperaturen verursachte Zeitverzögerung des Rückstellverhaltens der Außenhaut durch das auch bei tiefen Temperaturen vorhandene elastische Verhalten des Innenkerns überbrückt, so dass in vorteilhafter Weise auch bei tiefen Temperaturen eine gute Abdichtung ermöglicht wird.

Die erfindungsgemäße Dichtung ist in vorteilhafter Weise verschleißfest, kälteflexibel und umweltschonend, da auch bei tiefen Temperaturen keine Leckagen auftreten, so dass keine Medien, wie z.B. Bremsflüssigkeit, Mineralöl usw., in die Umwelt gelangen können. Ein weiterer Vorteil besteht darin, dass die Baugröße der Dichtung durch den Innenkern nicht vergrößert wird und sich die Kosten für die Dichtung nicht erhöhen.

Durch die in den abhängigen Ansprüchen aufgeführten Maßnahmen und Weiterbildungen sind vorteilhafte Verbesserungen der im unabhängigen Patentanspruch angegebenen Dichtung, insbesondere für eine Fluidbaugruppe in einem Fahrzeug, möglich.

Besonders vorteilhaft ist, dass die Außenhaut den Innenkern an den Dichtkanten umschließt, wodurch in vorteilhafter Weise durch den abriebbeständigen Werkstoff der Außenhaut die Verschleißbeständigkeit der Dichtung erhalten bleibt.

In Ausgestaltung der erfindungsgemäßen Dichtung, ist die Außenhaut als Nutring ausgeführt, in welchen der als Ring ausgeführte Innenkern als Nachstellelement eingebettet ist. Der Nutring und der als Ring ausgeführte Innenkern sind in vorteilhafter Weise so angeordnet, dass ein erster höherer Druck eines ersten Mediums den Ring gegen einen niedrigeren Druck eines zweiten Mediums in die Nut des Nutrings drückt und die Nut aufspreizt und dichtend gegen entsprechende Dichtkanten presst. Alternativ kann die Außenhaut als Dichtring ausgeführt werden, welche den Innenkern vollständig umschließt. Durch die Ausführung der Dichtung als Dichtungsverbund wird in vorteilhafter Weise das mit einer Zeitverzögerung auftretende Rückstellverhalten der Außenhaut durch das elastische Verhalten des Innenkerns überbrückt, welcher die Außenhaut entsprechend nachstellt.

In weiterer Ausgestaltung der erfindungsgemäßen Dichtung kann die Außenhaut in Abhängigkeit von den zu dichtenden Medien aus verschiedenen Werkstoffen hergestellt werden. So kann die Außenhaut für Anwendungen in Bremssystemen zum Abdichten von Bremsflüssigkeit beispielsweise aus verschleißbeständigem Ethylen-Propylen-Dien-Monomer (EPDM) hergestellt werden. Für Anwendungen in anderen Fluidsystemen kann die Außenhaut zum Abdichten von Mineralöl beispielsweise aus verschleißbeständigem Nitril-Butadien-Kautschuk (NBR) und/oder Polyurethan hergestellt werden. Generell kann die Außenhaut jedoch aus beliebigen verschleißbeständigen Elastomeren hergestellt werden. Der Innenkern kann beispielsweise aus kälteflexibleren und belastungsunabhängigeren Silikon hergestellt werden. Als kompletter Dichtungswerkstoff ist Silikon aber nicht geeignet, weil Silikon eine sehr geringe Verschleißbeständigkeit und Extrusionsbeständigkeit aufweist.

In Ausgestaltung der erfindungsgemäßen Dichtung, kann der Innenkern zur Herstellung der Außenhaut mit dem Werkstoff der Außenhaut umspritzt werden oder der Innenkern kann in die Außenhaut eingeknüpft werden. Die erfindungsgemäße Dichtung kann vorzugsweise zur Abdichtung eines beweglichen Kolbens oder einer beweglichen Stange in einer Fluidbaugruppe eines Fahrzeugs verwendet werden.

### Zeichnung

Vorteilhafte, nachfolgend beschriebene Ausführungsformen der Erfindung sowie das zu deren besserem Verständnis oben erläuterte, herkömmliche Ausführungsbeispiel sind in den Zeichnungen dargestellt. Es zeigen:
- Figur 1: eine schematische perspektivische Darstellung einer Fluidbaugruppe mit einer erfindungsgemäßen Dichtung,
- Figur 2: eine schematische Schnittdarstellung einer Fluidbaugruppe mit einer erfindungsgemäßen Dichtung,
- Figur 3: eine schematische Schnittdarstellung eines Details X aus Figur 1 für ein erstes Ausführungsbeispiel der erfindungemäßen Dichtung,
- Figur 4: eine schematische Schnittdarstellung des Details X aus Figur 1 für ein zweites Ausführungsbeispiel der erfindungemäßen Dichtung,
- Figur 5: eine schematische Schnittdarstellung des Details X aus Figur 1 für ein drittes Ausführungsbeispiel der erfindungemäßen Dichtung,
- Figur 6: eine schematische Schnittdarstellung, eines Teils einer Fluidbaugruppe mit einem vierten Ausführungsbeispiel der erfindungsgemäßen Dichtung,
- Figur 7: eine schematische Schnittdarstellung eines fünften Ausführungsbeispiels der erfindungemäßen Dichtung,
- Figur 8: eine schematische Schnittdarstellung eines sechsten Ausführungsbeispiels der erfindungemäßen Dichtung,
- Figur 9: eine schematische Schnittdarstellung einer herkömmlichen Fluidbaugruppe.

### Beschreibung

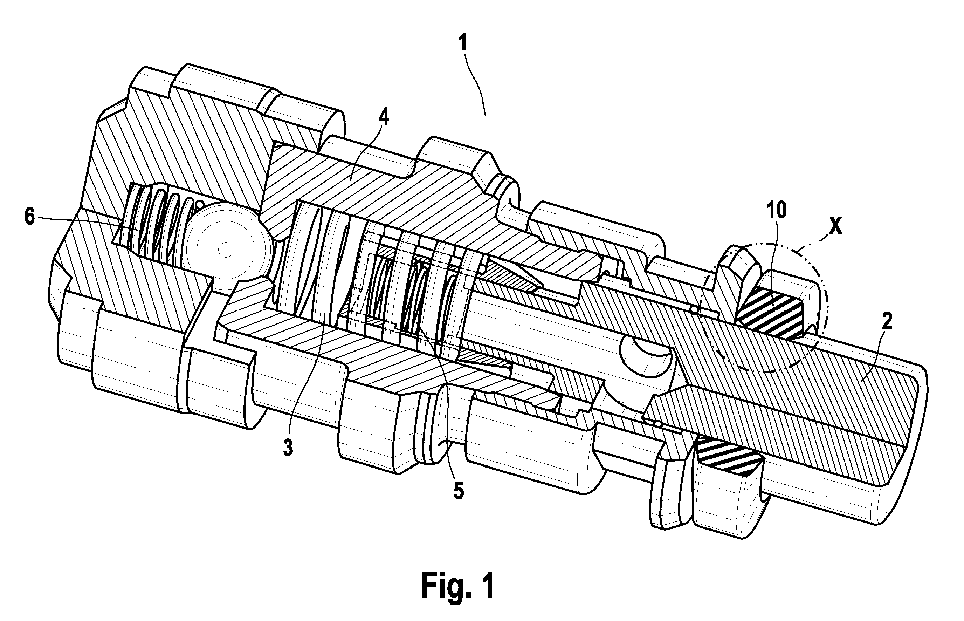

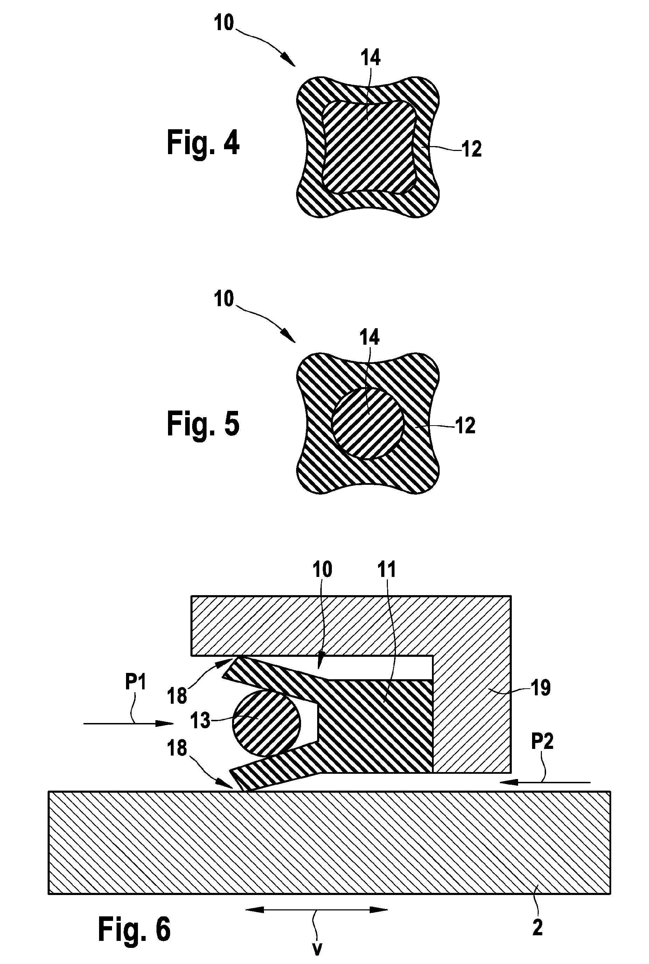

Wie aus Figur 1 ersichtlich ist, umfasst eine beispielhafte Fluidbaugruppe 1 in einem Fahrzeug, einen beweglichen Kolben 2, eine Kolbenrückstellfeder 3, welche in einem Zylinder 4 angeordnet ist, ein Einlassventil 5, ein Auslassventil 6 und eine erfindungsgemäße Dichtung 10, welche den beweglichen Kolben 2 abdichtet. Die erfindungsgemäße Dichtung 10 ist Teil einer Details X und wird nachfolgend unter Bezugnahme auf Figur 3, 4 und 5 im Detail beschrieben.

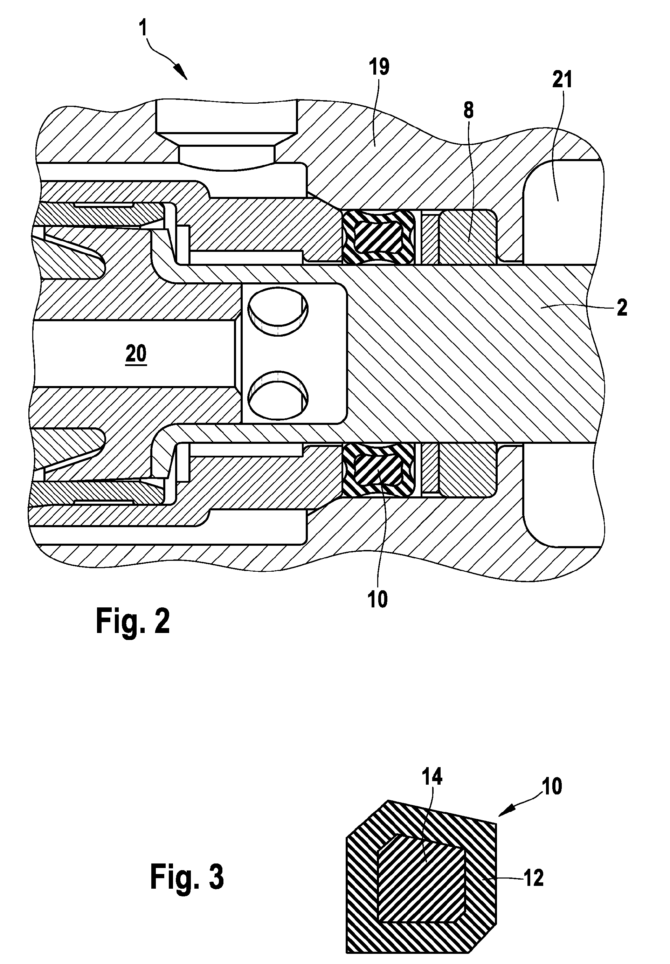

Figur 2 zeigt eine schematische Schnittdarstellung einer Fluidbaugruppe 1 mit einer erfindungsgemäßen Dichtung 10, welche den bewegten und in einer Führung 8 geführten Kolben 2 gegen ein Gehäuse 19 abdichtet. Der Kolben 2 wird in einem ersten Medium 20, beispielsweise in Bremsflüssigkeit, Motoröl usw., und in einem zweiten Medium 21, wie z.B. Luft. bewegt. Die Dichtung 10 dichtet den bewegten Kolben 2 und das Gehäuse 19 so ab, dass sich die beiden Medien 20, 21 nicht vermischen.

Figur 3 bis Figur 8 zeigen verschiedene Ausführungsformen der erfindungsgemäßen Dichtung 10. Figur 3 bis Figur 5 zeigen jeweils Ausführungsformen der erfindungsgemäßen Dichtung 10 als Dichtring mit einer Außenhaut 12, welcher einen Innenkern 14 vollständig umschließt. Zur Herstellung einer solchen Dichtung 10 wird der Innenkern 14 zur Erzeugung der gewünschten Form für die Außenhaut 12 beispielsweise mit dem Werkstoff der Außenhaut 12 umspritzt. Figur 6 bis Fig. 8 zeigen jeweils Ausführungsformen der erfindungsgemäßen Dichtung 10 mit einer als Nutring 11 ausgeführten Außenhaut, in welchen der als Ring 13 ausgeführte Innenkern als Nachstellelement eingebettet ist, so dass der Nutring 11 den Ring 13 wenigstens teilweise umschließt. Zur Herstellung einer solchen Dichtung 10 kann der Ring 13 zur Erzeugung der gewünschten Form für den Nutring 11 beispielsweise mit dem Werkstoff des Nutrings 11 umspritzt werden oder der Ring 13 kann in den Nutring 11 eingeknüpft werden.

Die Außenhaut 12 des Dichtrings bzw. der Nutring 11 ist aus einem abriebbeständigen und viskoelastischen Werkstoff und der Innenkern 14 bzw. der Ring 13 ist aus einem kälteflexiblen Werkstoff hergestellt, welcher eine tiefere Glasübergangstemperatur als der Werkstoff der Außenhaut 12 bzw. des Nutrings 11 aufweist. Für Anwendungen in Bremssystemen zum Abdichten von Bremsflüssigkeit kann die Außenhaut 12 bzw. der Nutring 11 beispielsweise aus verschleißbeständigem Ethylen-Propylen-Dien-Monomer (EPDM) hergestellt werden. Für Anwendungen in anderen Fluidsystemen kann die Außenhaut 12 bzw. der Nutring 11 zum Abdichten von Mineralöl beispielsweise aus verschleißbeständigem Nitril-Butadien-Kautschuk (NBR) und/oder Polyurethan hergestellt werden. Der Innenkern 14 bzw. der Ring 13 der erfindungsgemäßen Dichtung 10 ist beispielsweise aus kälteflexibleren und belastungsunabhängigeren Silikon hergestellt, welcher als Werkstoff für die komplette Dichtung 10 aber nicht geeignet ist, weil Silikon eine sehr geringe Verschleißbeständigkeit und Extrusionsbeständigkeit aufweist.

Der kälteelastische Innenkern 14 bzw. der Ring 13 gleicht bei tiefen Temperaturen die durch die Verhärtung des abriebbeständigen Werkstoffs verursachte fehlende Flexibilität der Außenhaut 12 bzw. des Nutrings 11 aus, um eine bei einer hohen Belastungsgeschwindigkeit entstandene Auslenkung des Kolbens 2 bzw. der Stange nachzustellen, so dass kein sichelförmiger Spalt zwischen dem bewegten Kolben 2 bzw. der bewegten Stange und der Dichtung 10 entsteht. Dadurch können in vorteilhafter Weise Undichtigkeiten und Leckagen vermieden werden.

Wie aus Figur 3 ersichtlich ist, umfasst ein erstes Ausführungsbeispiel der erfindungsgemäßen Dichtung 10 eine aus dem abriebbeständigen Werkstoff gefertigte Außenhaut 12, welche einen formgleichen aus Silikon gefertigten Innenkern 14 vollständig umschließt. Die Außenhaut 12 weist mehrere Kanten auf, welche zur Abdichtung beispielsweise elastisch gegen einen zu dichtenden Kolben 2 und ein Gehäuse 19 gepresst werden.

Wie aus Figur 4 ersichtlich ist, umfasst ein zweites Ausführungsbeispiel der erfindungsgemäßen Dichtung 10 eine rotationssymmetrische aus dem abriebbeständigen Werkstoff gefertigte Außenhaut 12, welche einen formgleichen aus Silikon gefertigten Innenkern 14 vollständig umschließt. Die Außenhaut 12 weist mehrere abgerundete Kanten auf, welche zur Abdichtung beispielsweise elastisch gegen einen zu dichtenden Kolben 2 und ein Gehäuse 19 gepresst werden.

Wie aus Figur 5 ersichtlich ist, umfasst ein drittes Ausführungsbeispiel der erfindungsgemäßen Dichtung 10 eine rotationssymmetrische aus dem abriebbeständigen Werkstoff gefertigte Außenhaut 12, welche einen aus Silikon gefertigten Innenkern 14 vollständig umschließt, welcher als Ring mit einem runden Querschnitt ausgeführt ist. Analog zum zweiten Ausführungsbeispiel gemäß Figur 4 weist die Außenhaut 12 mehrere abgerundete Kanten auf, welche zur Abdichtung beispielsweise elastisch gegen einen zu dichtenden Kolben 2 und ein Gehäuse 19 gepresst werden.

Figur 6 zeigt eine Ausführungsform der erfindungsgemäßen Dichtung 10 mit einer als Nutring 11 ausgeführten Außenhaut, in welchen ein als Ring 13 ausgeführter Innenkern als Nachstellelement eingebettet ist, so dass der Nutring 11 den Ring 13 wenigstens teilweise umschließt. Wie weiter aus Figur 6 ersichtlich ist, sind der Nutring 11 und der Ring 13 der erfindungsgemäßen Dichtung 10 so angeordnet, dass ein erster höherer Druck P1 eines ersten Mediums, z.B. Bremsflüssigkeit, Motoröl usw., den Ring 13 gegen einen niedrigeren Druck P2 eines zweiten Mediums, z.B. Luft, in die Nut des Nutrings 11 drückt und die Nut aufspreizt. Dadurch werden die aufgespreizten Enden der Nut des Nutrings als Dichtkanten 18 dichtend gegen den mit einer bestimmten Geschwindigkeit v bewegten Kolben bzw. gegen eine bewegte Stange und ein Gehäuse 19 gepresst. Zusätzlich gleicht der kälteelastische Ring 13 bei tiefen Temperaturen die durch die Verhärtung des abriebbeständigen Werkstoffs verursachte fehlende Flexibilität des Nutrings 11 aus, um eine bei einer hohen Belastungsgeschwindigkeit entstandene Auslenkung des Kolbens 2 bzw. der Stange nachzustellen, so dass kein sichelförmiger Spalt zwischen dem bewegten Kolben 2 bzw. der bewegten Stange und den Dichtkanten 18 des Nutrings 11 entsteht.

Figur 7 zeigt eine alternative Ausführungsform der erfindungsgemäßen Dichtung 10 aus Figur 6. Wie aus Figur 7 ersichtlich ist, weist ein fünftes Ausführungsbeispiel der erfindungsgemäßen Dichtung 10 mit einer als Nutring 11 ausgeführten Außenhaut, welche aus dem abriebbeständigen Werkstoff gefertigt ist, mehrere abgerundete Kanten auf, welche als Dichtkanten 18 zur Abdichtung elastisch gegen den abzudichtenden Kolben 2 und das Gehäuse 19 gepresst werden können, wobei der Nutring 11 den als Ring 13 aus Silikon gefertigten Innenkern als Nachstellelement teilweise umschließt.

Figur 8 zeigt eine weitere alternative Ausführungsform der erfindungsgemäßen Dichtung 10 aus Figur 6. Wie aus Figur 8 ersichtlich ist, weist ein sechstes Ausführungsbeispiel der erfindungsgemäßen Dichtung 10 mit einer als Nutring 11 ausgeführten Außenhaut, welche aus dem abriebbeständigen Werkstoff gefertigt ist, mehrere Kanten auf, welche als Dichtkanten 18 zur Abdichtung elastisch gegen den abzudichtenden Kolben 2 und das Gehäuse 19 gepresst werden können, wobei der Nutring 11 den als Ring 13 aus Silikon gefertigten Innenkern als Nachstellelement teilweise umschließt.

## Patentansprüche

1. Dichtung, insbesondere für eine Fluidbaugruppe (1) in einem Fahrzeug, mit einem abriebbeständigen Werkstoff, **dadurch gekennzeichnet, dass** der abriebbeständige Werkstoff als Außenhaut (12) einen Innenkern (14) aus einem kälteflexibleren Werkstoff wenigstens teilweise umschließt, wobei der Werkstoff des Innenkerns (14) eine tiefere Glasübergangstemperatur als der Werkstoff der Außenhaut (12) aufweist.

2. Dichtung nach Anspruch 1, **dadurch gekennzeichnet, dass** die Außenhaut (12) den Innenkern (14) an den Dichtkanten (18) umschließt.

3. Dichtung nach Anspruch 1 oder 2, **dadurch gekennzeichnet, dass** die Außenhaut (12) als Nutring (11) ausgeführt ist, in welchen der als Ring (13) ausgeführt Innenkern (14) als Nachstellelement eingebettet ist.

4. Dichtung nach Anspruch 3, **dadurch gekennzeichnet, dass** der Nutring (11) und der als Ring (13) ausgeführte Innenkern (14) so angeordnet sind, dass ein erster höherer Druck (P1) eines ersten Mediums den Ring (13) gegen einen niedrigeren Druck (P2) eines zweiten Mediums in die Nut des Nutrings (11) drückt und die Nut aufspreizt und dichtend gegen entsprechende Dichtkanten (18) presst.

5. Dichtung nach Anspruch 1 oder 2, **dadurch gekennzeichnet, dass** die Außenhaut (12) als Dichtring ausgeführt ist, welche den Innenkern (14) vollständig umschließt.

6. Dichtung nach einem der Ansprüche 1 bis 5, **dadurch gekennzeichnet, dass** die Außenhaut (12) in Abhängigkeit von den zu dichtenden Medien aus Ethylen-Propylen-Dien-Monomer (EPDM) und/oder aus Nitril-Butadien-Kautschuk (NBR) und/oder Polyurethan hergestellt ist.

7. Dichtung nach einem der Ansprüche 1 bis 6, **dadurch gekennzeichnet, dass** der Innenkern (14) aus Silikon hergestellt ist.

8. Dichtung nach einem der Ansprüche 1 bis 7, **dadurch gekennzeichnet, dass** der Innenkern (14) zur Herstellung der Außenhaut (12) mit dem Werkstoff der Außenhaut (12) umspritzbar ist.

9. Dichtung nach einem der Ansprüche 1 bis 7, **dadurch gekennzeichnet, dass** der Innenkern (14) in die Außenhaut (12) einknüpfbar ist.

10. Verwendung der Dichtung nach einem der Ansprüche 1 bis 9 zur Abdichtung eines beweglichen Kolbens (2) in einer Fluidbaugruppe (1) eines Fahrzeugs.
